# EUROPÄISCHE PATENTSCHRIFT

(11) **EP 0 814 452 B1**
(45) Veröffentlichungstag und Bekanntmachung des Hinweises auf die Patenterteilung: **13.03.2002**
(21) Anmeldenummer: 97401189.2
(22) Anmeldetag: 29.05.1997
(51) Int. Cl.: G09F 9/37, G02B 26/08, H04N 7/14

(54) **Telekommunikationsendgerät zur Projektion von visuell erfassbarer Information**
Telecommunications transmitter for projecting visual information
Dispositif terminal de telecommunication pour la projection d'information visuelle

(30) Priorität: 04.06.1996 DE 19622314
(43) Veröffentlichungstag der Anmeldung: 29.12.1997
(73) Patentinhaber: ALCATEL, 75008 Paris (FR)
(72) Erfinder: Kopp, Dieter, 71282 Hemmingen (DE); Hörmann, Thomas, 71723 Grossbottwar (DE)
(74) Vertreter: Schätzle, Albin, Dipl.-Phys.

(56) Entgegenhaltungen:
- EP-A- 0 663 770
- EP-A- 0 673 161
- EP-A- 0 770 896
- EP-A- 0 831 352
- DE-A- 3 131 226
- US-A- 5 467 215
- US-A- 5 490 009
- PATENT ABSTRACTS OF JAPAN vol. 018, no. 675 (E-1648), 20.Dezember 1994 -& JP 06 268763 A (HITACHI LTD), 22.September 1994,

## Beschreibung

Die Erfindung betrifft ein Telekommunikationsendgerät nach dem Oberbegriff des Anspruchs 1.

Aus der JP-A-06268763 ist ein Telekommunikationsendgerät bekannt, das als Funktelefon ausgeführt sein kann und das erste Mittel ("signal receiving part") zum Empfang visuell erfaßbarer Information ("facsimile") hat sowie zweite Mittel, die mindestens eine optische Linse umfassen, zur Projektion der empfangenen Information auf eine Projektionsfläche ("projecting part to project the picture information"). Das bekannte Telekommunikationsendgerät hat außerdem Kommunikationsmittel ("communication means"), d.h. also auch einen Prozessor zur Signalverarbeitung von Sprachdaten.

In der nicht vorveröffentlichten aber älteren europäische Patentanmeldung EP-A-0770896, in der die Vertragsstaaten FR DE GB benannt sind, wird bereits ein Telekommunikationsendgerät beschrieben mit ersten Mitteln zum Empfang visuell erfaßbarer Information und mit zweiten Mitteln, die mindestens eine optische Linse umfassen, zur Projektion der empfangenen Information auf eine Projektionsfläche, und mit einem Prozessor zur Signalverarbeitung von Sprachdaten. Außerdem sind in dem dortigen Telekommunikationsendgerät die zweiten Mittel so ausgeführt, daß sie zur Projektion einen Schaltkreis mit einer beleuchtbaren und reflektierenden optischen Schaltmatrix enthalten und daß die mindestens eine optische Linse das von der optischen Schaltmatrix reflektierte Licht auf die Projektionsfläche projiziert.

Aus der EP-A-067161 ist eine Vorrichtung mit Mitteln zur Projektion visuell erfaßbarer Information auf eine Projektionsfläche bekannt und mit zweiten Mitteln, die mindestens eine optische Linse umfassen, zur Projektion der empfangenen Information auf eine Projektionsfläche. Die zweiten Mittel sind so ausgeführt, daß sie zur Projektion einen Schaltkreis ("reflection type liquid crystal panel") mit einer beleuchtbaren und reflektierenden optischen Schaltmatrix enthalten. Die Vorrichtung ist Teil eines Video-Informations-Anzeige-Systems ("video information display system") und wird für die Projektion von Videobildern eingesetzt, die von einem oder mehreren Personalcomputern erzeugt werden. Die Vorrichtung, die selbst kein Telekommunikationsendgerät ist, verfügt über eine Schnittstelle ("communication interface") mit der eine N-ISDN, eine B-ISDN oder auch eine Ethernet-Verbindung zu einem entfernten Personalcomputer hergestellt werden kann.

Aus der US-A-5,590,009 ist auch eine Vorrichtung mit Mitteln zur Projektion visuell erfaßbarer Information auf eine Projektionsfläche bekannt und mit zweiten Mitteln, die mindestens eine optische Linse umfassen, zur Projektion der empfangenen Information auf eine Projektionsfläche. Die zweiten Mittel sind so ausgeführt, daß sie zur Projektion einen Schaltkreis mit einer beleuchtbaren und reflektierenden optischen Schaltmatrix enthalten ("spatial light modulator SLM". Es wird dort beschrieben, daß die Schaltmatrix auch als sogenannte DMD ("digital mirror device") ausgebildet sein kann, das heißt als eine Fläche mit NxM Mikrospiegeln, die einzeln halbkardanisch aufgehängt sind und die entsprechend der zu projizierenden Information ausgelenkt werden. Auch diese bekannte Vorrichtung ist selbst kein Telekommunikationsendgerät, sondern ist Teil eines Anzeige-Systems ("display system") und wird für die Projektion von Videobildern eingesetzt. Die Vorrichtung verfügt über eine Schnittstelle ("signal interface"), um Videosignale von angeschlossenen Videogeräten zu empfangen.

Aus EP 352 914 A2 ist ein Telekommunikationsendgerät mit Mitteln zum Empfang und zur Darstellung visuell erfaßbarer Information bekannt. Das dortige Telekommunikationsendgerät ist ein Telefon mit einer Miniaturanzeige für empfangene Information, wie etwa für empfangene Textzeichen oder für empfangene Faxnachrichten. Die dortige Miniaturanzeige enthält eine Anordnung von lichtemittierenden Dioden (LEDs), die mittels einer Vergrößerungsoptik betrachtet werden, wodurch die Miniaturanzeige dem Betrachter wie eine Großbildanzeige erscheint (virtual image display). Bei diesem bekannten Telekommunikationsendgerät kann nur eine Person, nämlich der Teilnehmer selbst, die visuelle Information betrachten. Dazu muß er die dortige Miniaturanzeige vor eines seiner beiden Augen halten. Die Miniaturanzeige ist dort in den Handapparat integriert, was ihn jedoch schwer und unhandlich macht.

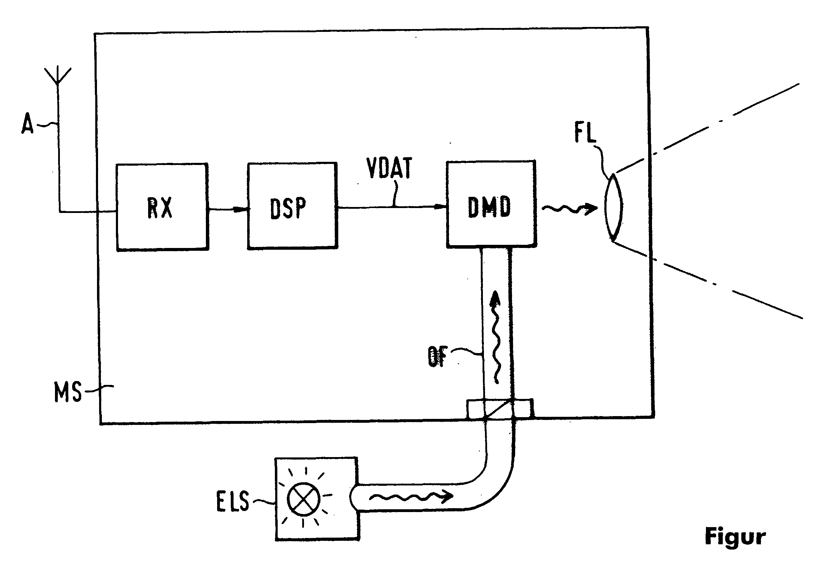

Aus dem Artikel von H. Lemme "Bildprojektoren überholen Großdisplays", erschienen auf Seiten 56 bis 70 in der Fachzeitschrift "Elektronik", Ausgabe 2/1996, Franzis-Verlag, Feldkirchen, Deutschland, ist eine Vorrichtung mit Mitteln zur Projektion von visuell erfaßbarer Information auf eine Projektionsfläche bekannt. Diese Vorrichtung enthält einen sogenannten DMD Chip (Digital Mirror Device), d.h. einen integrierten Schaltkreis mit einer reflektierenden optischen Schaltmatrix, die aus 1280 x 1024 Mikrospiegeln besteht. Die Mikrospiegel sind einzeln halbkardanisch aufgehängt und werden mittels Steuersignalen ausgelenkt (s. dort Bilder 4 und 9), um einfallendes Licht für eine Projektion auf einer Projektionsfläche zu reflektieren. Dort ist beschrieben, daß der DMD-Chip in Laser-Projektionssysteme für Computer- oder TV-Bilder eingesetzt wird.

Aus den eingangs genannten Druckschriften geht hervor, daß aus dem vorveröffentlichten Stand der Technik lediglich ein Telekommunikationsendgerät bekannt ist, das über Projektionsmittel, die eine optische Linse enthalten, verfügt. Dort ist jedoch nicht der Einsatz eines Schaltkreises mit einer beleuchtbaren und reflektierenden optischen Schaltmatrix zu entnehmen. Diese Schaltkreise, die eine sehr hohe Lichtausbeute haben, werden jedoch nur in denjenigen der eingangs genannten Druckschriften beschrieben, die sich auschließlich auf Videoprojektionsvorrichtungen und -systeme beziehen.

Aufgabe der Erfindung ist es, mit einem geringen Einsatz von Bauteilen ein Telekommunikationsendgerät für eine verbesserte Prokjektion von visuell erfaßbarer Information zu schaffen.

Gelöst wird die Aufgabe durch ein Telekommunikationsendgerät mit den Merkmalen nach Anspruch 1.

Demnach wird ein Telekommunikationsendgerät vorgeschlagen mit ersten Mitteln zum Empfang visuell erfaßbarer Information, mit zweiten Mitteln, die mindestens eine optische Linse umfassen, zur Projektion der empfangenen Information auf eine Projektionsfläche, und mit einem Prozessor zur Signalverarbeitung von Sprachdaten, welches sich dadurch auszeichnet, daß die zweiten Mittel zur Projektion einen Schaltkreis mit einer beleuchtbaren und reflektierenden optischen Schaltmatrix enthalten, daß die mindestens eine optische Linse das von der optischen Schaltmatrix reflektierte Licht auf die Projektionsfläche projiziert, daß die optische Schaltmatrix eine Fläche mit N x M Mikrospiegeln ist, die einzeln halbkardanisch aufgehängt sind und die mittels der empfangenen Information ausgelenkt werden und daß der Prozessor vorhandene Prozessorkapazität für die Steuerung des Schaltkreises nutzt.

Im wesentlichen schlägt die Erfindung also vor, das Telekommunikationsendgerät mit einer aus Mikrospiegeln gebildeten optischen Schaltmatrix auszustatten, die von dem Sprachsignalverarbeitungsprozessor gesteuert wird. Das hat den großen Vorteil, daß die Kapazität dieses an sich schon in dem Telekommunikationsendgerät vorhandenen Prozessors sehr ausgiebig genutzt werden kann für die Bildprojektion. Denn in den Zeitenspannen, in denen Bilder projeziert werden, tritt nur sehr selten eine Sprachdatenübertragung und somit auch die entsprechende Sprachdatensignalverarbeitung auf. Der Prozessor kann somit seine ganze Kapazität für die Steuerung der optischen Schaltmatrix zur Verfügung stellen. Damit wird eine sehr hohe Effizienz in der Ausnutzung der elektronischen Bauteile erzielt, was wiederum einer kompakten und kostengünstigen Bauweise entgegen kommt. Zudem werden durch die reflektierende Schaltmatrix eine sehr hohe Lichtausbeute und nur sehr geringe Streuverluste erzielt. Durch die erfindungsgemäßen Maßnahmen wird unter Einsatz von wenigen Bauteilen ein neues Telekommunikationsendgerät geschaffen für eine sehr lichtintensive Projektion von visuell erfaßbarer Information.

Vorteilhafte Ausgestaltungen der Erfindung sind den Unteransprüchen zu entnehmen.

Im weiteren wird die Erfindung anhand zweier Ausführungsbeispiele und mit Hilfe folgender schematischer Zeichnung beschrieben, die ein Funktelekommunikationsendgerät zeigt.

Die Figur zeigt ein Telekommunkikationsendgerät MS, das hier ein Funktelekommunikationsendgerät nach dem GSM-Standard ist. Dieses Funktelekommunikationsendgerät MS, im weiteren kurz "Mobilgerät" genannt, enthält eine Antenne, einen daran angeschlossenen Empfänger RX, einen diesem nachgeschalteten digitalen Signalprozessor DSP und einen diesem nachgeschalteten Schaltkreis DMD. Weiterhin enthält das Mobilgerät MS einen optischen Lichtwellenleiter OF, der von einem Anschlußsockel am Gehäuse des Mobilgerätes zu dem Schaltkreis DMD führt, und eine optische Linse FL.

Die mittels der Antenne und des Empfängers RX empfangenen Funksignale werden in Basisbandlage von dem digitalen Signalprozessor verarbeitet. Die empfangenen Funksignale enthalten Information VDAT zur visuellen Darstellung mittels des nachfolgend beschriebenen Schaltkreises DMD und der Linse FL. Die Information VDAT entspricht in diesem Beispiel digitalen Bilddaten zum Steuern des Schaltkreises DMD, der hier einem sogenannten "digital mirror device" entspricht. Der Schaltkreis DMD enthält eine reflektierende optische Schaltmatrix mit 640 x 480 angeordneten Mikrospiegeln. Durch Anschluß einer externen Lichtquelle ELS wird Licht über den Lichtwellenleiter OF auf diese Mikrospiegel geführt. Der von dem digitalen Signalprozessor DSP gesteuerte Schaltkreis DMD bewirkt, daß die Mikrospiegel in Abhängigkeit von den anliegenden Bilddaten VDAT ausgelenkt werden. Mit Hilfe der Spiegel und aufgrund der Bilddaten VDAT wird nun ein Schwarzweißbild auf eine Projektionsfläche (nicht dargestellt) projiziert. Die durch die Lichtquelle ELS bestrahlten Mikrospiegel reflektieren dazu das Licht in Abhängigkeit ihrer Auslenkung in Richtung einer optischen Achse, auf der sich die konvexe Linse FL befindet. Jeder der Mikrospiegel entspricht einem Bildpunkt auf der Projektionsfläche; durch Ansteuerung des entsprechenden Mikorspiegels kann dieser Bildpunkt hell oder dunkel geschaltet werden.

In diesem Beispiel werden schwarzweiße Standbilder projiziert, wie z. B. Textnachrichten nach dem sogenannten "GSM short message service" oder Faxnachrichten. Es ist jedoch auch denkbar, bewegte Bilder und Farbbilder zu projizieren; dafür ist jedoch eine höhere Übertragungsbandbreite auf dem Funkkanal und eine bessere Signalverarbeitung nötig. Außerdem ist es denkbar durch Verwendung von mehr als 640 x 480 Mikrospiegeln eine höhere Bildauflösung zu erreichen. Zur Steuerung der Mikrospiegel können anstelle eines DSP auch schnellere Prozessoren, wie z.B. Mikrokontroller mit RISC-Architektur, verwendet werden. Vorteilhaft ist es die zur Signalverarbeitung der Sprachdaten vorhandene Prozessorkapazität auch, wenn möglich für die Steuerung des DMD zu nutzen.

Das in der Figur dargestellte Mobilgerät ist einfach aufgebaut. Aufgrund der extern angeschlossenen Lichtquelle kann es sehr kompakt ausgeführt werden. Als externe Lichtquelle eignet sich etwa eine Halogenlampe mit einer Leistung von z. B. 100 W. Durch die oben beschriebene Projektion können nach Empfang von visuell erfaßbarer Information diese Informationen direkt auf eine Projektionsfläche, z. B. auf eine Wand, projiziert werden. Damit können auch mehrere Betrachter gleichzeitig die empfangene Information aufnehmen. Eine Ausgabevorrichtung wie z. B. ein Drucker für Faxnachrichten ist nicht erforderlich.

*Bei einem zweiten Ausführungsbeispiel (nicht dargestellt) erzeugen* drei Laser Lichtsignale unterschiedlicher Wellenlängen, der erste Laser im roten Bereich, der zweite Laser im grünen Bereich, und der dritte Laser im blauen Bereich. Eine Projektion von Farbbildern mittels der oben genannten Elemente wird nun im folgenden näher beschrieben:

Eine Steuerung steuert nun sowohl den Schaltkreis als auch die Laseranordnung im Multiplexbetrieb. Dazu ist die Steuerung mit der Laseranordnung über eine Signalleitung verbunden. Nacheinander werden nun einzelne Farbauszüge, d. h. roter, grüner und blauer Farbauszug, erzeugt und projiziert. Für den roten Farbauszug sendet die erste Laserdiode rotes Licht auf die in dem Schaltkreis enthaltene Schaltmatrix. Mittels der Bilddaten für den roten Farbauszug wird die Schaltmatrix angesteuert und durch die bereits beschriebene Reflektion ein roter Farbauszug als Bild auf die Projektionsfläche projiziert. Danach wird der grüne Farbauszug projiziert mittels Ansteuerung der grünen, zweiten Laserdiode und durch Steuerung mittels der Bilddaten für den grünen Farbauszug. Es folgt dann entsprechend der blaue Farbauszug.

Die drei Farbauszüge werden nacheinander mit einer Rate von 50 Hz gemultiplext, so daß auf der Projektionsfläche ein farbiges Bild erscheint. Zur Durchführung dieses beschriebenen, Multiplexverfahrens werden die Farbauszüge in einem Speicher zwischengespeichert. Weiterhin können auch Farbauszüge gespeichert werden, die zunächst nicht für die Projektion weiterverarbeitet werden (Standbildspeicherung).

## Patentansprüche

1. Telekommunikationsendgerät (MS) mit ersten Mitteln (RX) zum Empfang visuell erfaßbarer Information (VDAT), mit zweiten Mitteln, die mindestens eine optische Linse (FL) umfassen, zur Projektion der empfangenen Information (VDAT) auf eine Projektionsfläche, und mit einem Prozessor zur Signalverarbeitung von Sprachdaten,
**dadurch gekennzeichnet, daß** die zweiten Mittel (DMD, FL) zur Projektion einen Schaltkreis (DMD) mit einer beleuchtbaren und reflektierenden optischen Schaltmatrix enthalten, daß die mindestens eine optische Linse (FL) das von der optischen Schaltmatrix reflektierte Licht auf die Projektionsfläche projiziert, daß die optische Schaltmatrix eine Fläche mit N mal M (N und M, ganze Zahlen) Mikrospiegeln ist, die einzeln halbkardanisch aufgehängt sind und die mittels der empfangenen Information ausgelenkt werden und daß vorhandene Prozessorkapazität des Prozessors zur Signalverarbeitung von Sprachdaten für die Steuerung des Schaltkreises (DMD) nutzbar ist.

2. Telekommunikationsendgerät (MS) nach Anspruch 1,
**dadurch gekennzeichnet, daß** es ein Funktelekommunikationsendgerät (MS) ist und daß die ersten Mittel einen Funkempfänger (RX) enthalten, der Kurznachrichten empfängt, um sie mittels des Schaltkreises (DMD) auf die Projektionsfläche zu projizieren.

3. Telekommunikationsendgerät nach Anspruch 1,
**dadurch gekennzeichnet, daß** es ein drahtgebundenes Telekommunikationsendgerät ist und daß die ersten Mittel einen Empfänger für Faxnachrichten und / oder Videonachrichten enthalten.

4. Telekommunikationsendgerät nach Anspruch 1,
**dadurch gekennzeichnet, daß** es einen Lichtwellenleiter (OF) enthält, der Licht von einer externen Lichtquelle (ELS) auf die Mikrospiegel der Schaltmatrix führt.

## Claims

1. Telecommunication terminal (MS) having first means (RX) for receiving visually perceptible information (VDAT), having second means, which comprise at least one optical lens (FL), for projecting the received information (VDAT) onto a projection surface, and having a processor for signal processing of voice data, **characterised in that** the second means (DMD, FL) for projection contain a circuit (DMD) having an illuminatable and reflective optical switching matrix, **in that** the at least one optical lens (FL) projects the light reflected by the optical switching matrix onto the projection surface, **in that** the optical switching matrix is a surface having N times M (N and M integers) micromirrors, which are individually suspended by a semi-gimbal mount and which are deflected by means of the received information, and **in that** existing processor capacity of the processor for signal processing of voice data can be used to control the circuit (DMD).

2. Telecommunication terminal (MS) according to Claim 1, **characterised in that** it is a radio telecommunication terminal (MS) and **in that** the first means contain a radio receiver (RX), which receives short messages in order to project them onto the projection surface by means of the circuit (DMD).

3. Telecommunication terminal according to Claim 1, **characterised in that** it is a wire line telecommunication terminal and **in that** the first means contain a receiver for fax messages and/or video messages.

4. Telecommunication terminal according to Claim 1, **characterised in that** it contains an optical fibre (OF), which guides light from an external light source (ELS) onto the micromirrors of the switching matrix.

## Revendications

1. Dispositif ou appareil terminal de télécommunication (MS) comprenant des premiers moyens (RX) destinés à la réception d'information pouvant être perçue visuellement et dite information visuelle (VDAT), des seconds moyens englobant au moins une lentille optique (FL) et destinés à projeter l'information reçue (VDAT) sur une surface de projection, et comprenant également un processeur pour le traitement de signal de données vocales,
**caractérisé en ce que** les seconds moyens (DMD, FL) pour la projection comprennent un circuit de commutation (DMD) comportant une matrice de commutation optique qui peut être éclairée et qui est réfléchissante, **en ce que** ladite au moins une lentille optique (FL) projette la lumière réfléchie par la matrice dé commutation optique, sur la surface de projection, **en ce que** la matrice de commutation optique est une surface comportant N fois M (N et M, nombres entiers) micro-miroirs, qui sont suspendus individuellement par une articulation semi-universelle et sont déviés au moyen de l'information reçue, et **en ce que** de la capacité de processeur existante du processeur destiné au traitement de signal de données vocales, peut être utilisée pour la commande du circuit de commutation (DMD).

2. Appareil terminal de télécommunication (MS) selon la revendication 1,
**caractérisé en ce qu'**il est constitué par un appareil terminal de radio-télécommunication (MS), et **en ce que** les premiers moyens comprennent un radio-récepteur (RX) qui capte des informations radio courtes, en vue de les projeter sur la surface de projection au moyen du circuit de commutation (DMD).

3. Appareil terminal de télécommunication selon la revendication 1,
**caractérisé en ce qu'**il est constitué par un appareil terminal de télécommunication à liaison filaire, et **en ce que** les premiers moyens comprennent un récepteur pour des informations de télécopie (Fax) et/ou des informations vidéo.

4. Appareil terminal de télécommunication selon la revendication 1,
**caractérisé en ce qu'**il comprend un guide d'ondes lumineuses ou fibre optique (OF), qui conduit de la lumière d'une source de lumière externe (ELS) sur les micro-miroirs de la matrice de commutation.
